# EUROPEAN PATENT SPECIFICATION

(11) **EP 3 150 431 B1**
(45) Date of publication and mention of the grant of the patent: **06.03.2019**
(21) Application number: 16189334.2
(22) Date of filing: 16.09.2016
(51) Int. Cl.: B60Q 1/00, B60Q 1/26, B60Q 1/38, F21S 43/14, F21S 43/237, F21S 43/239, F21S 43/245

(54) **TWO-WHEELED MOTOR VEHICLE**
ZWEIRÄDRIGES MOTORFAHRZEUG
VÉHICULE MOTORISÉ À DEUX ROUES

(30) Priority: 30.09.2015 JP 2015194646
(43) Date of publication of application: 05.04.2017
(73) Proprietor: Honda Motor Co., Ltd., Minato-ku Tokyo 107-8556 (JP)
(72) Inventor: SOETA, Ryuhei, Wako-Shi, Saitama 351-0193 (JP); TAKENAKA, Nobuyuki, Wako-shi, Saitama 351-0193 (JP); MORI, Kazuhiko, Wako-shi, Saitama 351-0193 (JP); KATAOKA, Keiko, Wako-shi, Saitama 351-0193 (JP); KURIKI, Daisuke, Wako-shi, Saitama 351-0193 (JP); ASHIHARA, Eiji, Minato-ku, Tokyo 105-6024 (JP); CHOKSUWATTANASAKUL, Wid, 10520 Bangkok (TH)
(74) Representative: Piésold, Alexander James

(56) References cited:
- EP-A1- 2 298 605
- EP-A2- 2 568 321
- EP-A2- 2 796 319
- WO-A1-2015/002013
- WO-A1-2015/053718
- DE-A1-102014 205 602
- JP-A- 2012 243 452
- US-A1- 2014 160 778

## Description

The present invention relates to a two-wheeled motor vehicle, and particularly relates to a two-wheeled motor vehicle including a lighting device capable of irradiating the exterior of a vehicle body and increasing visibility of the vehicle body.

There has been known a lighting device of a two-wheeled motor vehicle in related art which houses a light source provided independently from light sources for a headlight and a position light in the lighting device and a light guide member in a housing to thereby increase the visibility of the lighting device by light emitted by the light guide member.

In WO-2014/157353A1, there is disclosed a lighting device of a two-wheeled motor vehicle which is provided with a light guide member formed so as to surround part of an outer peripheral side of a reflector for a headlight bulb, allowing the light guide member to emit light by a light source provided independently from the headlight bulb.

Although the lighting device described in WO-2014/157353A1 has an advantage of increasing the visibility of the lighting device by allowing the light guide member to emit light, a function of increasing the visibility of not only the lighting device but also the vehicle body itself by emphasizing an outline of the vehicle body by the light guide member has not been studied.

A two-wheeled motor vehicle in accordance with the pre-characterising part of claim 1 is known from DE 10 2014 205602. WO 2015/002013, EP 2796319 and US 2014/160778 disclose lighting devices for two-wheeled motor vehicles.

An object of at least the preferred embodiments of the present invention is to provide a two-wheeled motor vehicle capable of solving the above problem in the related art and capable of increasing the visibility of the vehicle body by the light guide member provided in the lighting device.

According to the present invention, there is provided a two-wheeled motor vehicle including a lighting device having a housing supported by a front portion of a vehicle body of the two-wheeled motor vehicle, a first light guide portion guiding irradiation light of a first light source in a long shape to a lower direction, which is provided in the housing, and an outer lens fixed to the housing so as to cover the first light guide portion, the two-wheeled motor vehicle comprising: a vehicle body cover covering part of the outer lens, a second light source arranged in the housing; and a second light guide portion guiding irradiation light of the second light source in a long shape to the lower direction, wherein the first light guide portion is arranged along an inner side of a first ridge line in a vehicle width direction, wherein the first ridge line has a convex shape toward the front direction of the vehicle body, the first ridge line being formed between an edge portion of the vehicle body cover and an end portion on the outer side of the first lens surface of the outer lens, characterised in that: a third light guide portion is formed continuously to the second light guide portion, to which irradiation light of the second light guide portion is guided, and a light guide plate connects the first light guide portion and the second light guide portion, wherein the third light guide portion has plural light guide grooves formed so as to extend from the second light guide portion toward the first light guide portion.

In the two-wheeled motor vehicle, the lighting device may include a left-side lamp body and a right-side lamp body which are symmetrical, the first light guide portion may be arranged on an outer side of the second light guide portion in a vehicle width direction, and the third light guide portion may extend from the second light guide portion toward the outer side in the vehicle width direction.

In the two-wheeled motor vehicle, a second lens surface continued to the first lens surface may be formed in the outer lens, a lower-side portion of the first light guide portion may be arranged along a second ridge line having an angle section formed between the first lens surface and the second lens surface, and the first ridge line and the second ridge line may be continuously formed.

In the two-wheeled motor vehicle, the first light source and the second light source may be respectively light sources for position lights, and a third light source for a winker device may be arranged in the housing at a position corresponding to the second lens surface in a front view of the vehicle body.

In the two-wheeled motor vehicle, a third ridge line having an angle section may be formed between the second lens surface and the vehicle body cover, and the third light source may be arranged in a region surrounded by the second ridge line and the third ridge line in the front view of the vehicle body.

According to the above characteristics, the two-wheeled motor vehicle includes the vehicle body cover covering part of the outer lens, and the first light guide portion is arranged along the first ridge line having an angle section formed between the vehicle body cover and the first lens surface of the outer lens. Therefore, the first ridge line as an outline of the vehicle body which is visually recognized from the front of the two-wheeled motor vehicle is emphasized when the first light guide portion emits light, which can increase the visibility of the lighting device itself and can increase the visibility of the vehicle body.

According to the above characteristics, the two-wheeled motor vehicle includes the second light source arranged in the housing, the second light guide portion guiding irradiation light of the second light source, and the two-wheeled motor vehicle includes the third light guide portion formed continuously to the second light guide portion, to which irradiation light of the second light guide portion is guided. Therefore, the visibility of the lighting device and the vehicle body can be further increased by emission of the first light guide portion and the third light guide portion.

According to the above characteristics, the two-wheeled motor vehicle includes the light guide plate connecting the first light guide portion and the second light guide portion, wherein the third light guide portion may be plural light guide grooves formed so as to extend from the second light guide portion toward the first light guide portion. Therefore, the first to third light guide portions can be formed as an integrated part easily. Furthermore, the visibility of the lighting device and the two-wheeled motor vehicle can be improved by the third light guide portion having different direction and size from the long-shaped first light guide portion.

According to the above characteristics, the lighting device may include the left-side lamp body and the right-side lamp body which are symmetrical, the first light guide portion may be arranged on an outer side of the second light guide portion in a vehicle width direction, and the third light guide portion may extend from the second light guide portion toward the outer side in the vehicle width direction. Therefore, the third light guide portion forms lines of light directed from the inner side to the outer side of the vehicle body, which improves the design and increases the visibility of the lighting device.

According to the above characteristics, the second lens surface continued to the first lens surface may be formed in the outer lens, the lower-side portion of the first light guide portion may be arranged along the second ridge line having an angle section formed between the first lens surface and the second lens surface, and the first ridge line and the second ridge line may be continuously formed. Therefore, the first light guide portion is allowed to emit light along the second ridge line formed in the outer lens, which can increase the visibility of the lighting device itself as well as can increase the visibility of the vehicle body.

According to the above characteristics, the first light source and the second light source may be respectively light sources for position lights, and the third light source for the winker device may be arranged in the housing at the position corresponding to the second lens surface in the front view of the vehicle body. Therefore, the lighting device in which the position lights and the winker device are integrated can be obtained by providing the light source for the winker device in addition to the light source for the position lights in the same housing.

According to the above characteristics, the third ridge line having the angle section may be formed between the second lens surface and the vehicle body cover, and the third light source may be arranged in the region surrounded by the second ridge line and the third ridge line in the front view of the vehicle body. Therefore, the visibility of the third light source at the time of lighting can be increased by arranging the third light source at the position surrounded by ridge lines formed by the outer lens and the vehicle body cover.

A preferred embodiment of the present invention will be explained in detail with reference to the drawings.

Fig. 1 is a left-side view of a two-wheeled motor vehicle according to the embodiment.
Fig. 2 is a front view of the two-wheeled motor vehicle.
Fig. 3 is a partially-enlarged perspective view around the front of the two-wheeled motor vehicle.
Fig. 4 is a front view of a lighting device.
Fig. 5 is a left-side view of a left-side lamp body.
Fig. 6 is a back view of the lighting device.
Fig. 7 is a front view of a right-side lamp body.
Fig. 8 is a front view of the right-side lamp body in a state where an outer lens is removed from the state shown in Fig. 7.
Fig. 9 is a front view of the right-side lamp body in a state where an extension is removed from the state shown in Fig. 8.
Fig. 10 is a front view of the right-side lamp body in a state where a light guide member is removed from the state shown in Fig. 9.
Fig. 11 is a front view of the right-side lamp body in a state where a blindfold member is removed from the state shown by Fig. 10.
Fig. 12 is a front view of the light guide member.
Fig. 13 is a back view of the light guide member.
Fig. 14 is a cross-sectional view taken along 14-14 line of Fig. 9.
Fig. 15 is a cross-sectional view taken along 15-15 line of Fig. 4.
Fig. 16 is a cross-sectional view taken along 16-16 line of Fig. 4.
Fig. 17 is a cross-sectional view taken along 17-17 line of Fig. 4.

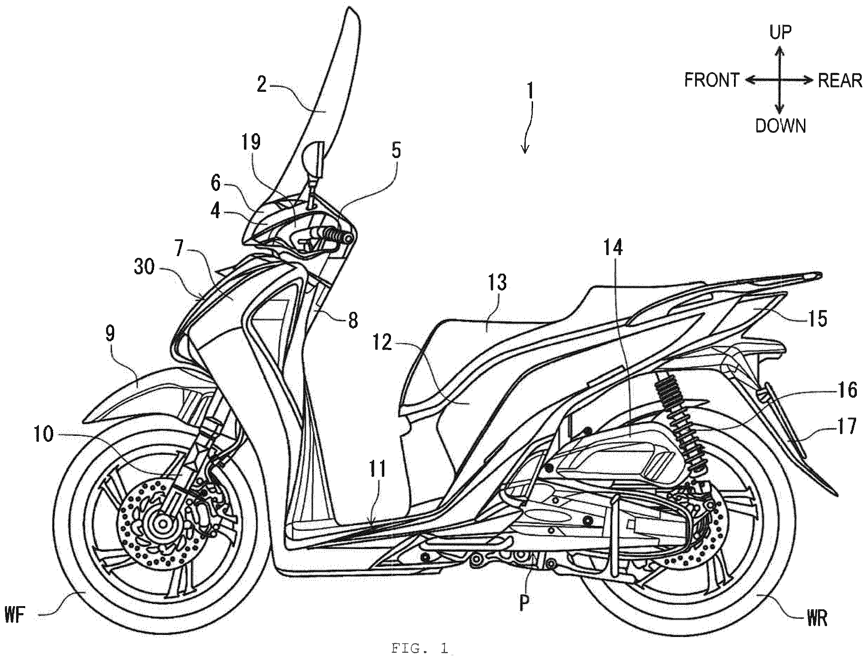

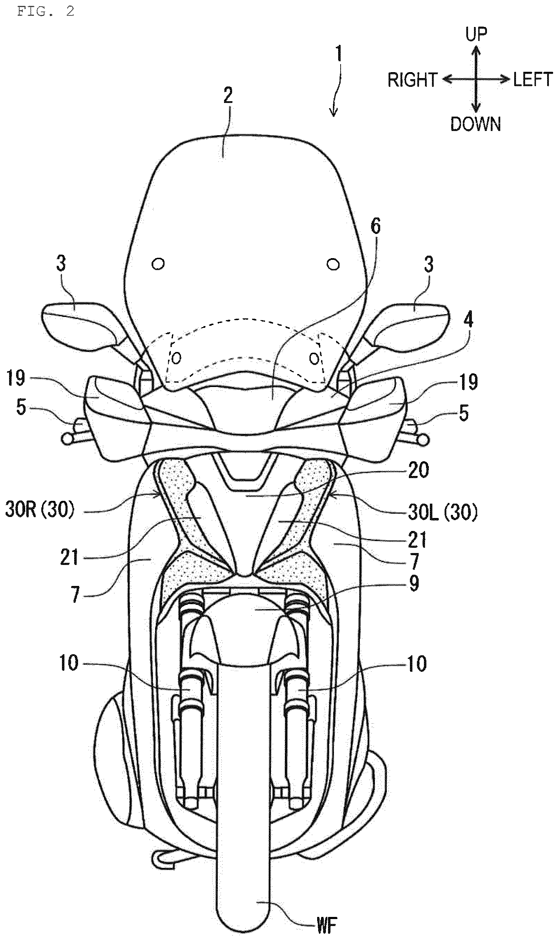

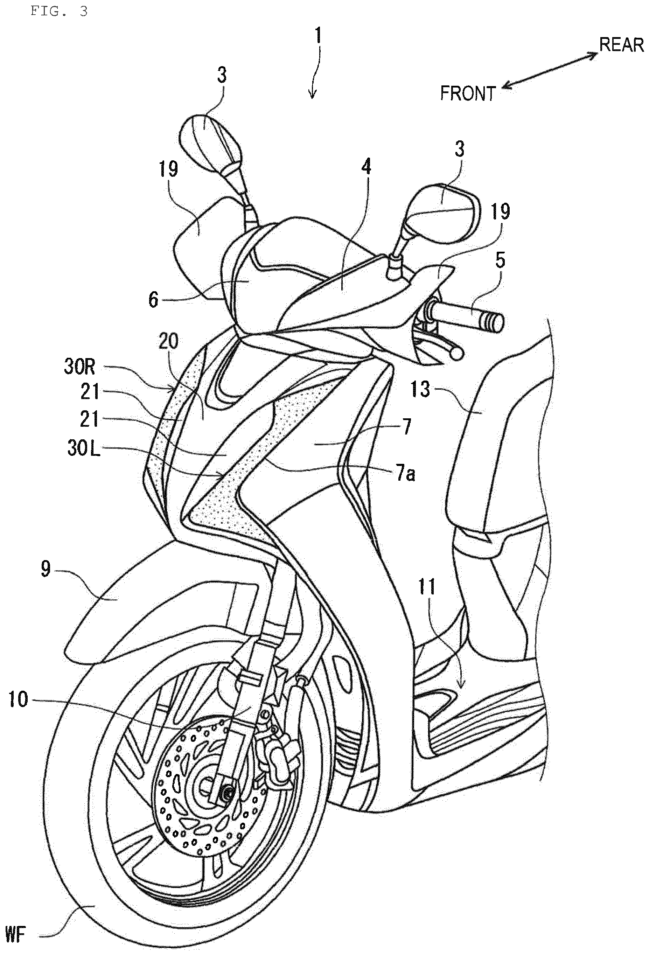

Fig. 1 is a left-side view of a two-wheeled motor vehicle 1 according to the embodiment. Fig. 2 is a front view of the two-wheeled motor vehicle 1 and Fig. 3 is a partially-enlarged perspective view around the front of the two-wheeled motor vehicle 1.

The two-wheeled motor vehicle 1 is a scooter-type saddled vehicle which is provided with a low floor 11 on which driver's feet are put between a steering handle 5 and a seat 13. A front fork 10 pivotally supporting a front wheel WF so as to rotate freely can be steered freely by the steering handle 5. The vicinity of the steering handle 5 is covered with a headlight cover 4 which supports a headlight 6. A knuckle guard 19 is attached to both sides of the headlight cover 4 in a vehicle width direction, and a wind screen 2 is arranged in an upper part of the headlight cover 4.

On both sides of a center cowl 20 arranged below the headlight cover 4, a lighting device 30 in which position lights and winker devices are housed in one housing is disposed. Front-side covers 7 as a right and left pair of vehicle covers are arranged on the outer side of the lighting device 30 in the vehicle width direction. On a vehicle body rear side of the front-side covers 7, a floor panel 8 facing driver's legs are provided.

A lower part of the seat 13 is covered with a rear cowl 12, and a unit-swing type power unit P in which an engine and a transmission are integrally formed is pivotally supported in a position behind the low floor 11 so as to swing freely. A rear end portion of the power unit P pivotally supporting a rear wheel WR as a drive wheel so as to rotate freely is suspended in the vehicle body by a rear cushion 16, and an air cleaner box 14 is attached above the power unit P. A tail lamp device 15 integrally formed with the winker device is attached to a rear end portion of the rear cowl 12, and a rear fender 17 is fixed below the tail lamp device 15.

As shown in Fig. 2 and Fig. 3, the lighting device 30 (a portion to which sketch hatching is applied) includes a left-side lamp body 30L and a right-side lamp body 30R (hereinafter may be referred to as merely "lamp bodies 30L, 30R") each having a long light emitting surface in a vertical direction between the headlight 6 and the front fender 9. The center cowl 20 at the center in the vehicle width direction and a right-and-left pair of cover members 21 which are adjacent to the center cowl 20 to cover inner portions of the lamp bodies 30L, 30R are arranged between the right-and-left lamp bodies 30L and 30R. Outer portions of the lamp bodies 30L, 30R are covered with edge portions 7a of the front-side covers 7 extending toward the inner side in the vehicle width direction.

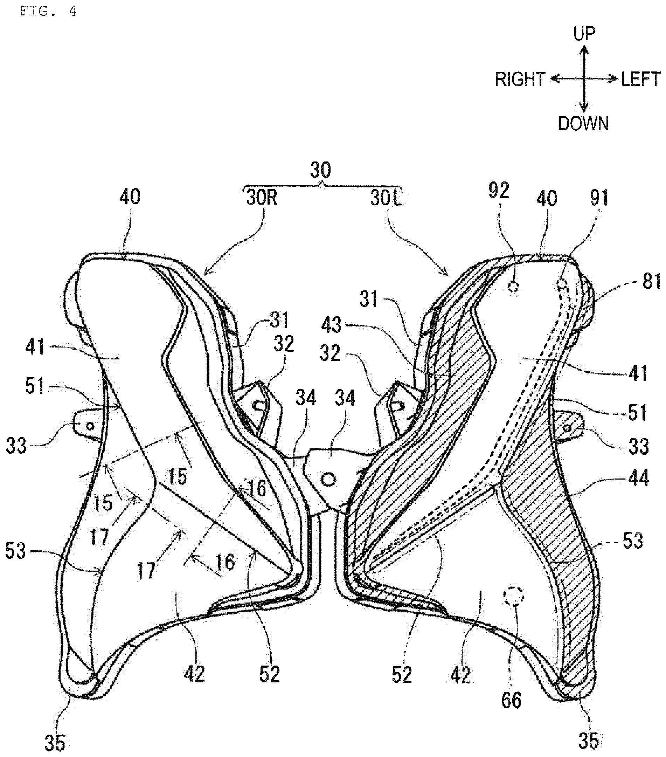

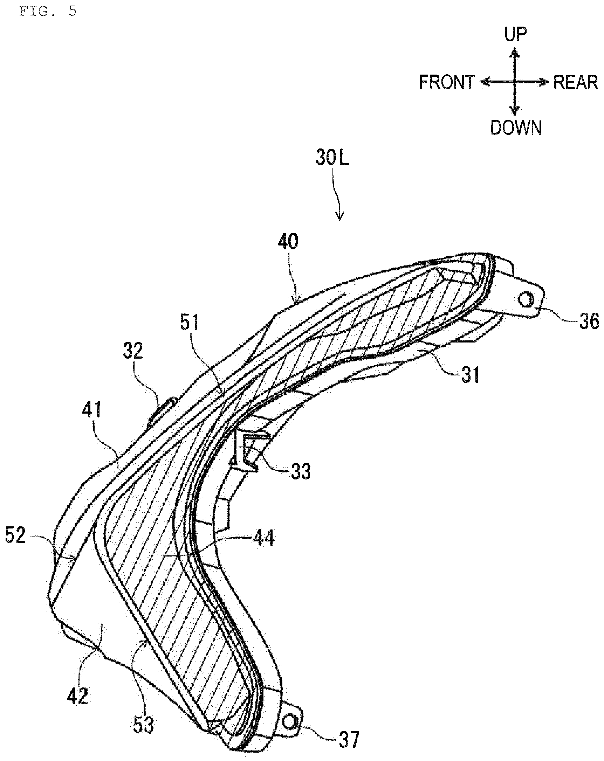

Fig. 4 is a front view of the lighting device 30. Fig. 5 is a left-side view of the left-side lamp body 30L. The right-and-left lamp bodies 30L, 30R of the lighting device 30 are connected to each other at the approximately center position by allowing a fastening member to penetrate through connecting stays 34 extending to the inner side in the vehicle width direction.

The lamp bodies 30L, 30R have a right and left symmetrical structure. Explanation will be made below by focusing attention to the left-side lamp body 30L. Light sources of position lights 91, 92 and a light source for a winker 66 are housed in a housing 31 made of a colored opaque synthetic resin and so on. An inner side attachment stay 32 is formed in the housing 31 above the connecting stay 34, and an upper attachment stay 36, a middle attachment stay 33 and a lower attachment stay 37 are formed at edge portions on the outer side in the vehicle width direction. The lamp body 30L is formed in a long shape in the vertical direction, and an extended portion 35 extending in a further lower direction is formed in a lower end portion of the outer side in the vehicle width direction.

In the following explanation, the light source for the position light 91 may be referred to as a first light source, the light source for the position light 92 may be referred to as a second light source and the light source for the winker 66 may be referred to as a third light source.

A transparent outer lens 40 having an outer shape extending along the housing 31 is attached to the front side of the vehicle body in the housing 31. When the lamp body 30L is attached to the vehicle body, an inner-side hidden portion 43 (a hatched portion) on the inner side of the outer lens 40 in the vehicle width direction is covered with the cover member 21 so as not to be seen from the outside, and an outer-side hidden portion 44 (a hatched portion) on the outer side in the vehicle width direction is covered with the front side cover 7 so as not to be seen from the outside. Accordingly, when the lighting device 30 is assembled to the vehicle body, only a first lens surface 41 extending from the portion where the light sources for the position lights 91, 92 are arranged to the lower direction on the inner side and a second lens surface 42 having an approximately triangle shape extending to the lower direction on the outer side continuously from the first lens surface 41 are exposed in the front of the vehicle body.

In this case, a first ridge line 51 (a portion surrounded by a dashed-line) having an angle section is formed between an end portion on the outer side of the first lens surface 41 in the vehicle width direction and the edge portion 7a of the front-side cover 7. A second ridge line 52 (a portion surrounded by a dashed line) having an angle section is formed between the first lens surface 41 and the second lens surface 42, and further, a third ridge line 53 (a portion surrounded by a dashed line) having an angle section is formed between an end portion on the outer side of the second lens surface 42 in the vehicle width direction and the edge portion 7a of the front-side cover 7. Considering that the width (line width) of the portion forming the ridge line may change easily as a connecting portion of two surfaces forming the angle section is sharpened or rounded from the viewpoint of design or in relation to manufacturing processes, ranges surrounded by shown dashed-lines including the line portions are shown as the first, second and third ridge lines in the following description.

The first ridge line 51 is formed next to the edge portion 7a of the front-side cover 7 being arranged close to the first lens surface 41, and the third ridge line 53 is formed by the edge portion 7a of the front-side cover 7 being arranged close to the second lens surface 42.

Irradiation light of the light source for the position light 91 is guided to the lower direction of the vehicle body by a later-described first light guide portion 81. The first light guide portion 81 is arranged along the inner side of the first ridge line 51 and the second ridge line 52.

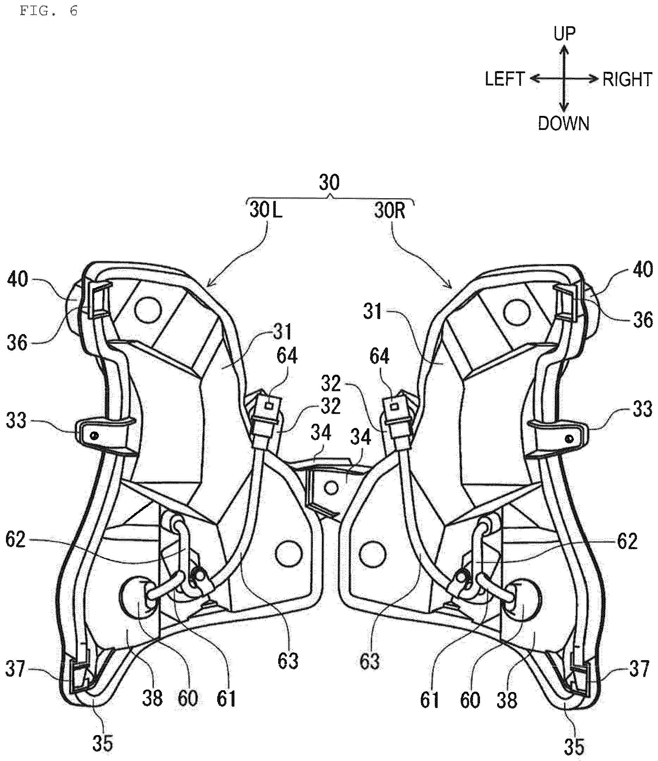

Fig. 6 is a back view of the lighting device 30. The same symbols as described above indicate the same or similar portions. A reflector housing convex portion 38 to which a socket 60 of the light source for the winker 66 formed of an incandescent bulb is attached is formed at a lower part of the housing on the back side. A wiring for the winker 61 connected to the socket 60 is bounded with a wiring for the position lights 62 which supplies power to the light sources for the position lights 91, 92 formed of LEDs (light emitting diodes) to form a harness 63. A connector 64 is attached to an end portion of the harness 61. The light source for the winker 66 may be a light source formed of an LED or other structures.

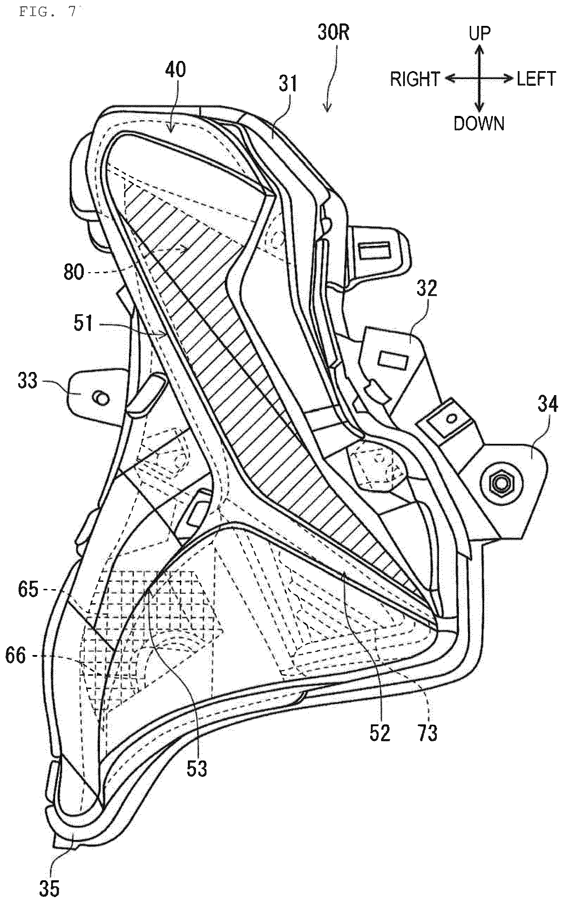

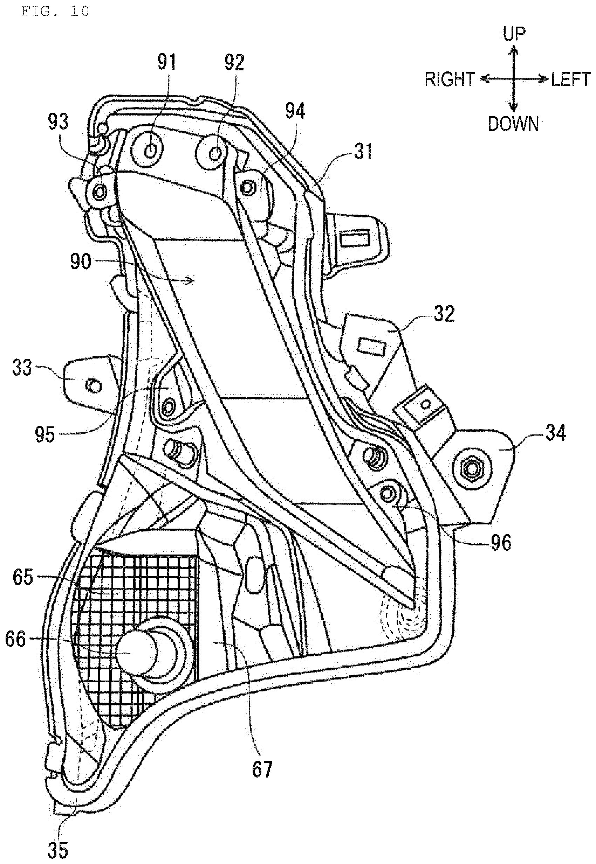

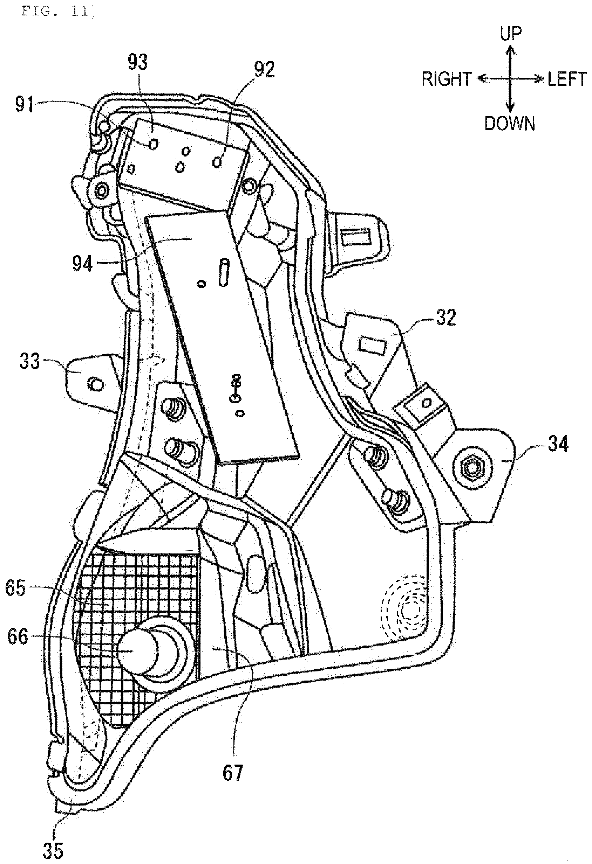

Fig. 7 is a front view of the right-side lamp body 30R. Explanation of a structure will be made below by focusing attention to the right-side lamp body 30R. Plural parts are arranged in a stacked state between the housing 31 and the outer lens 40. Specifically, in a position corresponding to the first lens surface 41, an extension 70, a light guide member 80, a blindfold member 90 (see Fig. 10) and substrates 93, 94 (see Fig. 11) are arranged so as to be overlapped from the front side of the vehicle body in this order.

On the other hand, in the inner side of a position corresponding to the second lens surface 42 in the vehicle width direction, a design member 73 which is integrally formed with the extension 70 is arranged. In the outer side of the position corresponding to the second lens surface 42 in the vehicle width direction, a winker reflector 65 supporting the light source for the winker 66 is arranged.

In the lighting device 30, portions where light emission can be directly viewed from the front of the vehicle body are the light guide member 80 (hatched portion) exposed to the front from an opening of the extension 70 in the first lens surface 41 and a portion corresponding to the winker reflector 65 in the second lens surface 42. Portions in the outer side of the direct light emitting portions which are not covered with the front-side cover 7 and the cover member 21 can emit light faintly by leakage light.

In the embodiment, in the front view of the vehicle body, an edge of the opening of the extension 70 on the outer side in the vehicle width direction is configured to extend along an edge of the front-side cover 7 on the inner side in the vehicle width direction. In the front view of the vehicle body, an edge of the opening of the extension 70 in the inner side in the vehicle width direction is configured to extend along an edge of the cover member 21 on the outer side in the vehicle width direction.

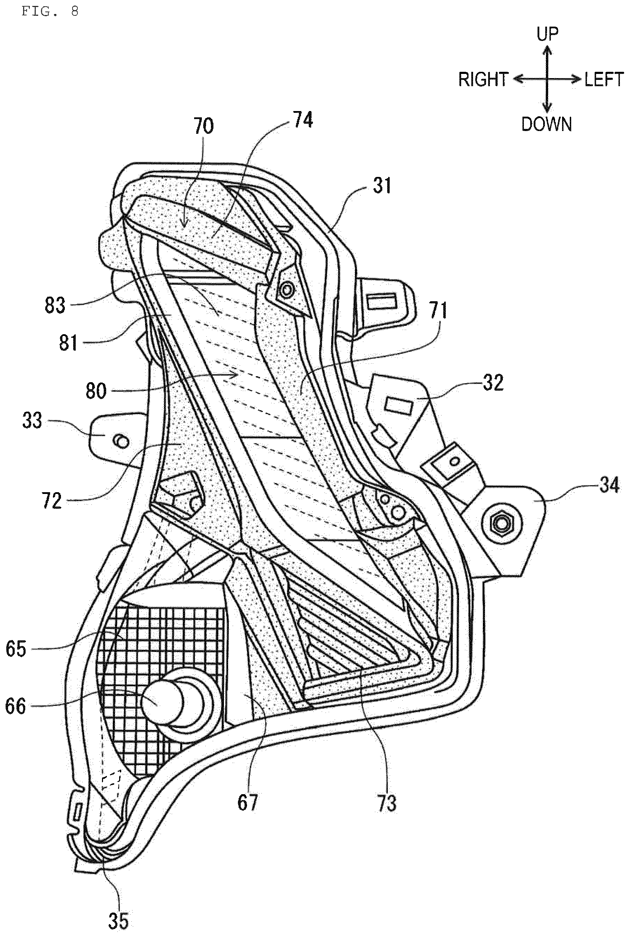

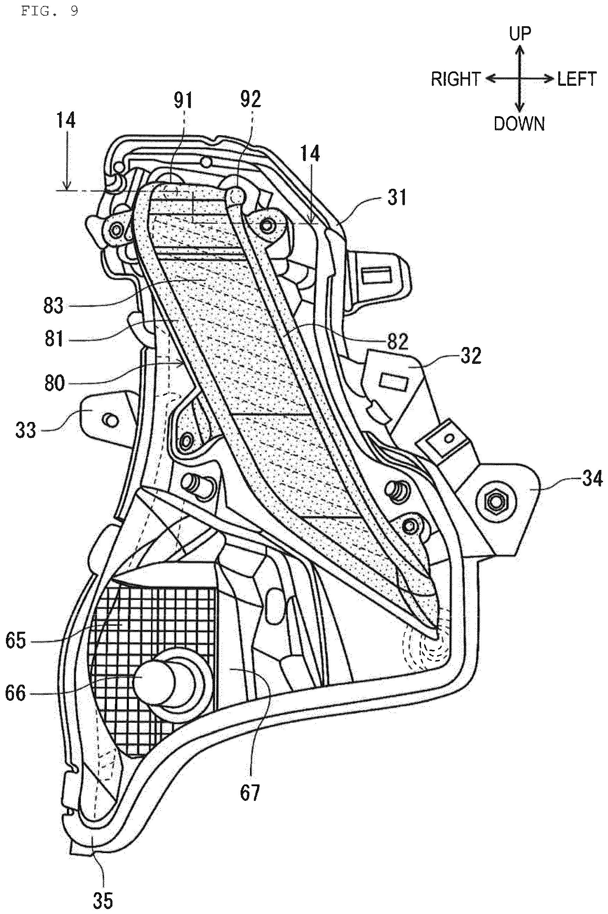

Fig. 8 is a front view of the right-side lamp body 30R in a state where the outer lens 40 is removed from the state shown in Fig. 7. Fig. 9 is a front view of the right-side lamp body 30R in a state where the extension 70 is removed from the state shown in Fig. 8. The extension 70 is formed of a synthetic resin having high brightness, a synthetic resin to which reflection surface processing is performed and so on, which has an upper portion 74 covering part of an upper part of the light guide member 80, an inner portion 71 covering part of the inner side of the light guide member 80 in the vehicle width direction, an outer portion 72 covering the housing 31 in the position on the outer side of the light guide member 80 in the vehicle width direction and the design member 73 connected to a lower part of the outer portion 72. Accordingly, the light guide member 80 is configured so that only portions not covered with the upper portion 74 and the inner portion 71 of the extension 70 are exposed to the front.

As shown in Fig. 9, the light guide member 80 includes a round-bar shaped first light guide portion 81 guiding irradiation light of the light source 91 to a lower direction, a round-bar shaped second light guide portion 82 guiding irradiation light of the light source 92 to the lower direction and a light guide plate 83 connecting the first light guide portion 81 and the second light guide portion 82. When the extension 70 is attached, the light sources 91, 92 and part of the third light guide portion 83a are hidden by the upper portion 74 of the extension 70, and the second light guide portion 82 and part of the light guide plate 83 are hidden by the inner portion 71 of the extension 70. A shielding plate 67 is provided on the inner side of the winker reflector 65 in the vehicle width direction so that irradiation light of the light source for the winker 66 does not leak to the inner side in the vehicle width direction.

The light source for the winker 66 is arranged in a region surrounded by the second ridge line 52 and the third ridge line 53 in the front view of the vehicle body. Accordingly, the light source for the winker 66 is arranged in the position surrounded by ridge lines formed by the outer lens 40 and the front-side cover 7, thereby increasing the visibility of the winker device at the time of lighting.

Fig. 10 is a front view of the right-side lamp body 30L in a state where the light guide member 80 is removed from the state shown in Fig. 9. Fig. 11 is a front view of the right-side lamp body 30R in a state where the blindfold member 90 is removed from the state shown in Fig. 10. The blindfold member 90 supporting the light guide member 80 has an outer shape of a size larger than the light guide member 80 and is formed of a colored opaque synthetic resin or the like so that the substrate 93 and the control substrate 94 supporting the light sources for the position lights 91, 92 are not seen from the outside. The irradiation light of the light sources for the position lights 91, 92 is emitted from an opening formed in the blindfold member 90 to the front side of the vehicle body.

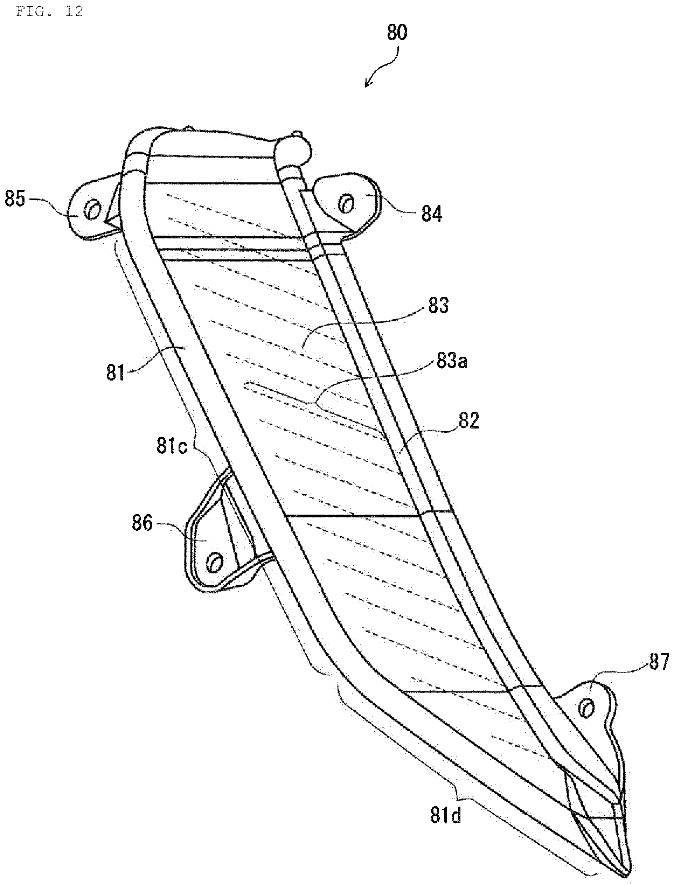

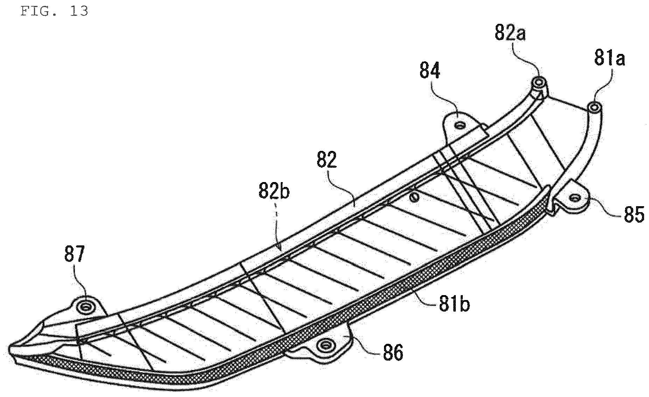

Fig. 12 is a front view of the light guide member 80. Fig. 13 is a back view of the light guide member 80. Attachment stays 84, 85, 86 and 87 for attaching the light guide member 80 to the housing 31 are formed at outer edge portions of the light guide member 80. The first light guide member 81 includes an upper-side straight line portion 81c extending along the first ridge line 51 (see Fig. 4) and a lower-side portion 81d extending along the second ridge line 52 (see Fig. 4) at the emission of the position lights.

The light guide member 80 is an integrated part formed of a colored transparent synthetic resin or the like, and includes the round-bar shaped first guide portion 81 guiding irradiation light of the light source for the position light 91 to the lower direction in the drawing, the round-bar shaped second light guide portion 82 guiding irradiation light of the light source for the position light 92 to the lower direction in the drawing and the light guide plate 83 connecting the first light guide portion 81 and the second light guide portion 82. As the light guide member 80 is fixed in a state where the upper part thereof is inclined backward so as to be positioned on the rear side of the vehicle body, both the first light guide portion 81 and the second light guide portion 82 guide the irradiation light of the light sources 91, 92 to the lower direction on the front of the vehicle body when mounted on the vehicle.

When the position lights are active, irradiation light of the light source 91 incident from an incident end surface 81a allows the entire first light guide portion 81 to emit light. A reflection surface 81b formed of a corner cube reflector and so on which reflects irradiation light to the front side of the vehicle body is formed on the back side of the first light guide portion 81.

On the other hand, irradiation light of the light source 92 incident from an incident end surface 82a allows the second light guide portion 82 to emit light as well as allows a third light guide portion 83a as light guide grooves formed in the light guide plate 83 to emit light, which is formed continuously to the second light guide portion 82. A reflection surface 82b which reflects irradiation light to the third light guide portion 83a is formed on the inner side of the second light guide portion 82 in the vehicle width direction.

As described above, the vicinity of the light sources 91, 92 and the vicinity of the second light guide portion 82 are hidden by the extension 70 and the cover member 21 when the lighting device 30 is attached to the vehicle body, therefore, only the light emission of the entire first light guide portion 81 and plural light guide grooves 83a can be seen from the outside when the light sources 91, 92 are turned on.

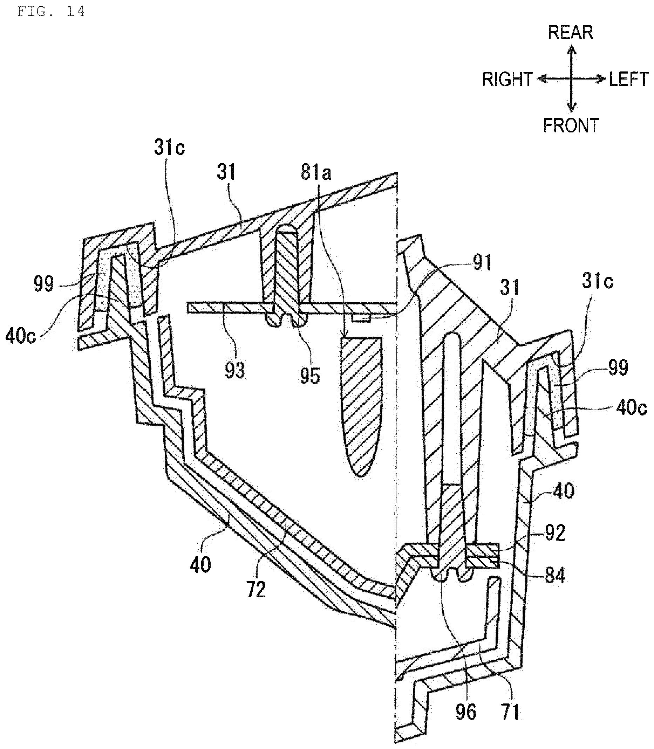

Fig. 14 is a cross-sectional view taken along 14-14 line of Fig. 9. An engaging projection 40c formed in an outer edge of the outer lens 40 is fixed in an engaging groove 31c provided in an outer peripheral portion of the housing 31 through a packing 99. The outer portion 72 and the inner portion 71 of the extension 70 are closely arranged on the back side of the outer lens 40, respectively. The substrate 93 on which the light source for the position light 91 formed of the LED is fixed to a bottom portion of the housing 31 by a screw 95. The incident end surface 81a of the first light guide portion 81 is closely arranged on the front side of the light source 91 in the vehicle body. Similarly, the incident end surface 82a of the second light guide portion 82 is closely arranged on the front side of the light source 92 in the vehicle body. A screw 96 screwed to the housing 31 closely to the vehicle width direction co-fastens an attachment stay 92 of the blindfold member 90 and the attachment stay 84 of the light guide member 80.

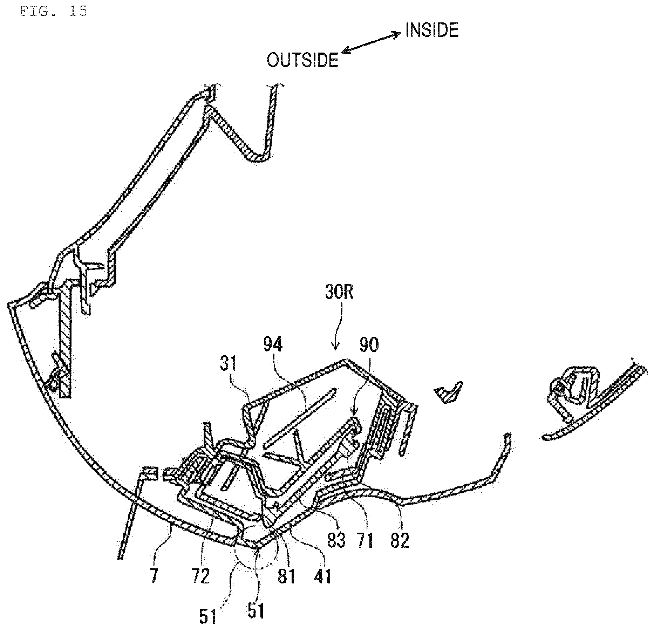

Fig. 15 is a cross-sectional view taken along 15-15 line of Fig. 4. As described above, the position lights of the lighting device 30 according to the embodiment are configured so that only the entire first light guide portion 81 and the plural light guide grooves 83a are seen from the outside in the front view of the vehicle body. In this case, the straight line portion 81c of the first light guide portion 81 emits light along the first ridge line 51 (see Fig. 4) formed between the outside end portion of the first lens surface 41 in the vehicle width direction and the edge portion 7a of the front-side cover 7.

Accordingly, the long-shaped first light guide portion 81 emits light along the first ridge line 51 having a convex shape toward the front direction of the vehicle body, and the first ridge line 51 is emphasized as the outline of the vehicle body which is visually recognized from the vehicle body front direction of the two-wheeled motor vehicle 1, which increases the visibility of the lighting device 30 itself as well as increasing the visibility of the vehicle body.

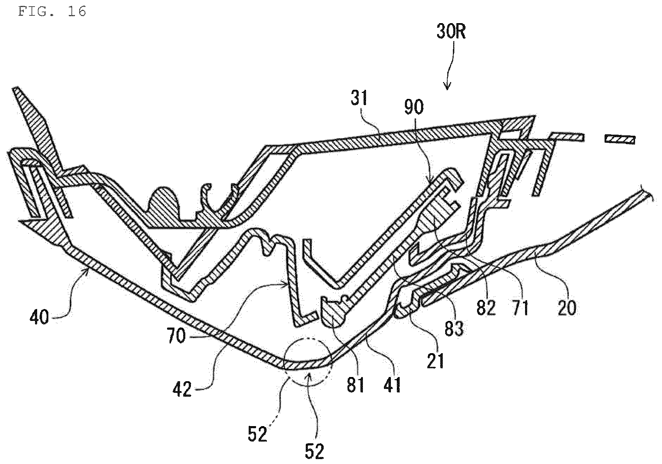

Fig. 16 is a cross-sectional view taken along 16-16 line of Fig. 4. The lower-side portion 81d inclined to the center side of the vehicle body at the lower part of the first light guide portion 81 has a shape extending along the second ridge line 52 (see Fig. 4) formed between the first lens surface 41 and the second lens surface 42.

Accordingly, the lower part of the first light guide portion 81 emits light along the second ridge line 52 having a convex shape toward the front direction of the vehicle body, and the second ridge line 52 is emphasized as the outline of the vehicle body which is visually recognized from the front direction of the two-wheeled motor vehicle 1, which increases the visibility of the lighting device 30 itself as well as increasing the visibility of the vehicle body.

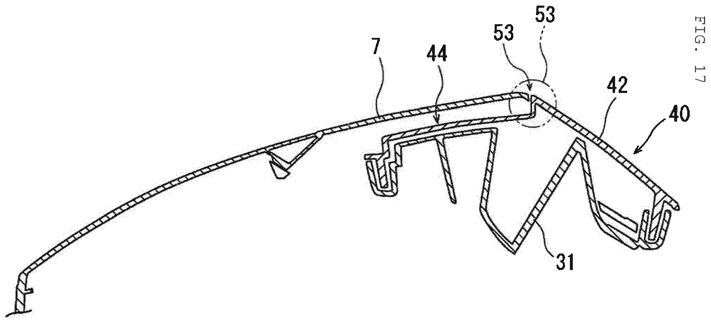

Fig. 17 is a cross-sectional view taken along 17-17 line of Fig. 4. The winker device including the light source for the winker 66 and the winker reflector 65 allows an outer side region in the vehicle width direction to emit light, which includes the third ridge line 53 as an outer edge in the second lens surface 42 surrounded by the second ridge line 52 and the third ridge line 53 in the front view of the vehicle body. Accordingly, the third ridge line 53 is emphasized as the outline of the vehicle body which is visually recognized from the front direction of the two-wheeled motor vehicle 1, which increases the visibility of the lighting device 30 itself as well as increasing the visibility of the vehicle body.

The structure and the state of the lighting device, the shape of the vehicle body cover, the material and the shape of the housing or the outer lens, the material and the shape of the extension, the material and the shape of the light guide member and so on are not limited to the above embodiments, and various alterations may occur. The lighting device according to the invention of the present application can be applied not only to the scooter-type vehicle but also to various types of vehicles such as a sports-type two-wheeled motor vehicle having a fuel tank between the steering handle and the seat.

An explanation of the reference signs used in the drawings is provided below.

1 ... two-wheeled motor vehicle, 7 ... front-side cover (vehicle body cover), 7a ... edge portion, 21 ... cover portion, 30 ... lighting device, 30L, 30R ... lamp bodies (lighting device), 31 ... housing, 40 ... outer lens, 41 ... first lens surface, 42 ... second lens surface, 43 ... inner-side hidden portion, 44 ... outer-side hidden portion, 51 ... first ridge line, 52 ... second ridge line, 53 ... third ridge line, 65 ... winker reflector, 66 ... light source for winker (third light source), 70 ... extension, 80 ... light guide member, 81 ... first light guide portion, 81c ... straight line portion, 81d ... lower-side portion, 82 ... second light guide portion, 83 ... light guide plate, 83a ... third light guide portion (light guide grooves), 90 ... blindfold member, 91 ... light source for position light (first light source), 92 ... light source for position light (second light source)

## Claims

1. A two-wheeled motor vehicle including a lighting device (30) having
a housing (31) supported by a front portion of a vehicle body of the two-wheeled motor vehicle (1),
a first light guide portion (81) guiding irradiation light of a first light source (91) in a long shape to a lower direction, which is provided in the housing (31), and
an outer lens (40) fixed to the housing (31) so as to cover the first light guide portion (81), the two-wheeled motor vehicle comprising:
a vehicle body cover (7) covering part of the outer lens (40),
a second light source (92) arranged in the housing (31); and
a second light guide portion (82) guiding irradiation light of the second light source (92) in a long shape to the lower direction,
wherein the first light guide portion (81) is arranged along an inner side of a first ridge line (51) in a vehicle width direction, wherein the first ridge line (51) has a convex shape toward the front direction of the vehicle body, the first ridge line being formed between an edge portion (7a) of the vehicle body cover (7) and an end portion on the outer side of the first lens surface (41) of the outer lens (40), **characterised in that**:
a third light guide portion (83a) is formed continuously to the second light guide portion (82), to which irradiation light of the second light guide portion (82) is guided, and
a light guide plate (83) connects the first light guide portion (81) and the second light guide portion (82),
wherein the third light guide portion (83a) has plural light guide grooves formed so as to extend from the second light guide portion (82) toward the first light guide portion (81).

2. The two-wheeled motor vehicle according to claim 1,
wherein the lighting device (30) includes a left-side lamp body (30L) and a right-side lamp body (30R) which are symmetrical,
the first light guide portion (81) is arranged on an outer side of the second light guide portion (82) in a vehicle width direction, and
the third light guide portion (83a) extends from the second light guide portion (82) toward the outer side in the vehicle width direction.

3. The two-wheeled motor vehicle according to claim 1 or 2,
wherein a second lens surface (42) continued to the first lens surface (41) is formed in the outer lens (40),
a lower-side portion (81d) of the first light guide portion (81) is arranged along a second ridge line (52) having an angle section formed between the first lens surface (41) and the second lens surface (42), and
the first ridge line (51) and the second ridge line (52) are continuously formed.

4. The two-wheeled motor vehicle according to claim 3,
wherein the first light source (91) and the second light source (92) are respectively light sources for position lights, and
a third light source (66) for a winker device is arranged in the housing (31) at a position corresponding to the second lens surface (42) in a front view of the vehicle body.

5. The two-wheeled motor vehicle according to claim 4,
wherein a third ridge line (53) having an angle section is formed between the second lens surface (42) and the vehicle body cover (7), and
the third light source (66) is arranged in a region surrounded by the second ridge line (52) and the third ridge line (53) in the front view of the vehicle.

## Patentansprüche

1. Zweirädriges Kraftfahrzeug beinhaltend eine Beleuchtungsvorrichtung (30) mit
einem Gehäuse (31), das von einem vorderen Abschnitt einer Fahrzeugkarosserie des zweirädrigen Kraftfahrzeugs (1) getragen wird,
einen ersten Lichtleiterabschnitt (81), der Bestrahlungslicht einer ersten Lichtquelle (91) in einer langen Form in eine untere Richtung leitet, die in dem Gehäuse (31) vorgesehen ist, und
eine äußere Linse (40) so am Gehäuse (31) befestigt ist, um den ersten Lichtleiterabschnitt (81) abzudecken, wobei das zweirädrige Kraftfahrzeug umfasst:
eine Fahrzeugkarosserieabdeckung (7), die einen Teil der äußeren Linse (40) abdeckt,
eine zweite Lichtquelle (92), die in dem Gehäuse (31) angeordnet ist; und
einen zweiten Lichtleiterabschnitt (82), der das Bestrahlungslicht der zweiten Lichtquelle (92) in einer langen Form in die untere Richtung leitet,
wobei der erste Lichtleiterabschnitt (81) entlang einer Innenseite einer ersten Firstlinie (51) in einer Fahrzeugbreitenrichtung angeordnet ist, wobei die erste Firstlinie (51) eine konvexe Form in Richtung der vorderen Richtung der Fahrzeugkarosserie aufweist, wobei die erste Firstlinie zwischen einem Kantenabschnitt (7a) der Fahrzeugkarosserieabdeckung (7) und einem Endabschnitt auf der Außenseite der ersten Linsenoberfläche (41) der äußeren Linse (40) ausgebildet ist,
**dadurch gekennzeichnet, dass**:
ein dritter Lichtleiterabschnitt (83a) kontinuierlich zum zweiten Lichtleiterabschnitt (82) ausgebildet ist, zu dem Bestrahlungslicht des zweiten Lichtleiterabschnitts (82) geleitet wird, und
eine Lichtleiterplatte (83) den ersten Lichtleiterabschnitt (81) und den zweiten Lichtleiterabschnitt (82) verbindet,
wobei der dritte Lichtleiterabschnitt (83a) mehrere Lichtleiternuten aufweist, die so ausgebildet sind, um sich von dem zweiten Lichtleiterabschnitt (82) in Richtung des ersten Lichtleiterabschnitts (81) zu erstrecken.

2. Zweirädriges Kraftfahrzeug nach Anspruch 1,
wobei die Beleuchtungsvorrichtung (30) einen linken Lampenkörper (30L) und einen rechten Lampenkörper (30R) beinhaltet, die symmetrisch sind,
der erste Lichtleiterabschnitt (81) auf einer Außenseite des zweiten Lichtleiterabschnitts (82) in einer Fahrzeugbreitenrichtung angeordnet ist und
der dritte Lichtleiterabschnitt (83a) sich von dem zweiten Lichtleiterabschnitt (82) zur Außenseite in der Fahrzeugbreitenrichtung erstreckt.

3. Zweirädriges Kraftfahrzeug nach Anspruch 1 oder 2,
wobei in der äußeren Linse (40) eine zweite Linsenoberfläche (42) ausgebildet ist, die bis zur ersten Linsenoberfläche (41) fortgesetzt ist,
ein unterer Seitenabschnitt (81d) des ersten Lichtleiterabschnitts (81) entlang einer zweiten Firstlinie (52) mit einem zwischen der ersten Linsenoberfläche (41) und der zweiten Linsenoberfläche (42) ausgebildeten Winkelabschnitt angeordnet ist und
die erste Firstlinie (51) und die zweite Firstlinie (52) kontinuierlich ausgebildet sind.

4. Das zweirädrige Kraftfahrzeug nach Anspruch 3,
wobei die erste Lichtquelle (91) und die zweite Lichtquelle (92) jeweils Lichtquellen für Positionsleuchten sind und
eine dritte Lichtquelle (66) für eine Blinkvorrichtung im Gehäuse (31) an einer Position entsprechend der zweiten Linsenoberfläche (42) in einer Frontansicht der Fahrzeugkarosserie angeordnet ist.

5. Zweirädriges Kraftfahrzeug nach Anspruch 4,
wobei zwischen der zweiten Linsenoberfläche (42) und der Fahrzeugkarosserieabdeckung (7) eine dritte Firstlinie (53) mit einer Winkelsektion ausgebildet ist und
die dritte Lichtquelle (66) in einem von der zweiten Firstlinie (52) und der dritten Firstlinie (53) in der Vorderansicht des Fahrzeugs umgebenen Bereich angeordnet ist.

## Revendications

1. Véhicule motorisé à deux roues incluant un dispositif d'éclairage (30) ayant
un boîtier (31) supporté par une portion avant d'un corps de véhicule du véhicule motorisé à deux roues (1),
une première portion de guidage de lumière (81) guidant la lumière d'irradiation d'une première source de lumière (91) dans une forme allongée vers une direction inférieure, qui est prévue dans le boîtier (31), et
une lentille extérieure (40) fixée au boîtier (31) de façon à couvrir la première portion de guidage de lumière (81), le véhicule motorisé à deux roues comprenant :
un recouvrement de corps de véhicule (7) couvrant une partie de la lentille extérieure (40),
une deuxième source de lumière (92) agencée dans le boîtier (31) ; et
une deuxième portion de guidage de lumière (82) guidant la lumière d'irradiation de la deuxième source de lumière (92) dans une forme allongée vers la direction inférieure,
dans lequel la première portion de guidage de lumière (81) est agencée le long d'un côté intérieur d'une première ligne de crête (51) dans une direction de largeur de véhicule, dans lequel la première ligne de crête (51) a une forme convexe vers la direction avant du corps de véhicule, la première ligne de crête étant formée entre une portion de bord (7a) du recouvrement de corps de véhicule (7) et une portion d'extrémité sur le côté extérieur de la première surface de lentille (41) de la lentille extérieure (40),
**caractérisé en ce que** :
une troisième portion de guidage de lumière (83a) est formée de manière continue à la deuxième portion de guidage de lumière (82), vers laquelle la lumière d'irradiation de la deuxième portion de guidage de lumière (82) est guidée, et
une plaque de guidage de lumière (83) relie la première portion de guidage de lumière (81) et la deuxième portion de guidage de lumière (82),
dans lequel la troisième portion de guidage de lumière (83a) a une pluralité de rainures de guidage de lumière formées de façon à s'étendre de la deuxième portion de guidage de lumière (82) vers la première portion de guidage de lumière (81).

2. Véhicule motorisé à deux roues selon la revendication 1,
dans lequel le dispositif d'éclairage (30) inclut un corps de lampe côté gauche (30L) et un corps de lampe côté droit (30R) qui sont symétriques,
la première portion de guidage de lumière (81) est agencée sur un côté extérieur de la deuxième portion de guidage de lumière (82) dans une direction de largeur de véhicule, et
la troisième portion de guidage de lumière (83a) s'étend de la deuxième portion de guidage de lumière (82) vers le côté extérieur dans la direction de largeur de véhicule.

3. Véhicule motorisé à deux roues selon la revendication 1 ou 2,
dans lequel une seconde surface de lentille (42) continue à la première surface de lentille (41) est formée dans la lentille extérieure (40),
une portion côté inférieur (81d) de la première portion de guidage de lumière (81) est agencée le long d'une deuxième ligne de crête (52) ayant une section d'angle formée entre la première surface de lentille (41) et la seconde surface de lentille (42), et
la première ligne de crête (51) et la deuxième ligne de crête (52) sont formées de manière continue.

4. Véhicule motorisé à deux roues selon la revendication 3,
dans lequel la première source de lumière (91) et la deuxième source de lumière (92) sont respectivement des sources de lumière pour feux de position, et
une troisième source de lumière (66) pour un dispositif de clignotant est agencée dans le boîtier (31) à une position correspondant à la seconde surface de lentille (42) dans une vue avant du corps de véhicule.

5. Véhicule motorisé à deux roues selon la revendication 4,
dans lequel une troisième ligne de crête (53) ayant une section d'angle est formée entre la seconde surface de lentille (42) et le recouvrement de corps de véhicule (7), et
la troisième source de lumière (66) est agencée dans une région entourée par la deuxième ligne de crête (52) et la troisième ligne de crête (53) dans la vue avant du véhicule.
